# EUROPEAN PATENT APPLICATION

(11) **EP 2 221 477 A1**
(43) Date of publication of application: **25.08.2010**
(21) Application number: 08850482.4
(22) Date of filing: 14.11.2008
(51) Int. Cl.: F04B 39/00, F04C 29/00, H02K 5/22

(54) **ELECTRIC COMPRESSOR TERMINAL DEVICE**

(30) Priority: 16.11.2007 JP 2007297926
(71) Applicant: Sanden Corporation, Isesaki-shi, Gunma 372-8502 (JP)
(72) Inventor: TAGUCHI, Masanori, Isesaki-shi Gunma 372-8502 (JP); OSAKA, Masahiko, Isesaki-shi Gunma 372-8502 (JP); KOYAMA, Shigeyuki, Isesaki-shi Gunma 372-8502 (JP); KOBAYASHI, Eiji, Isesaki-shi Gunma 372-8502 (JP)
(74) Representative: Grünecker, Kinkeldey, Stockmair & Schwanhäusser Anwaltssozietät
(86) International application number: PCT/JP2008/070777
(87) International publication number: WO 2009/063979

(57) **Abstract**

Provided is a terminal device for an electric compressor including: a partition wall arranged between a container part for a compression mechanism drive motor present with a lubricant-containing fluid to be compressed and a circuit part for supplying power to the motor; and a power supply terminal member hermetically extending through the partition wall so as to supply power to the motor. An electric communication portion of the terminal member extending between the two parts is covered with insulating varnish. Even when polyalkylene glycol-based oil is used as the lubricant-containing fluid to be compressed, it is possible to realize an electric compressor terminal device with a simple structure at a low cost which can exhibit a sufficiently high insulation performance.

## Description

### Technical Field of the Invention

The present invention relates to a terminal device for an electric compressor, and specifically, to a terminal device for an electric compressor which can change a kind of lubricant contained in fluid to be compressed (for example, refrigerant) to a cheap one, and even when the lubricant is changed, can ensure good insulating and electric communication properties and can be constructed inexpensively.

### Background Art of the Invention

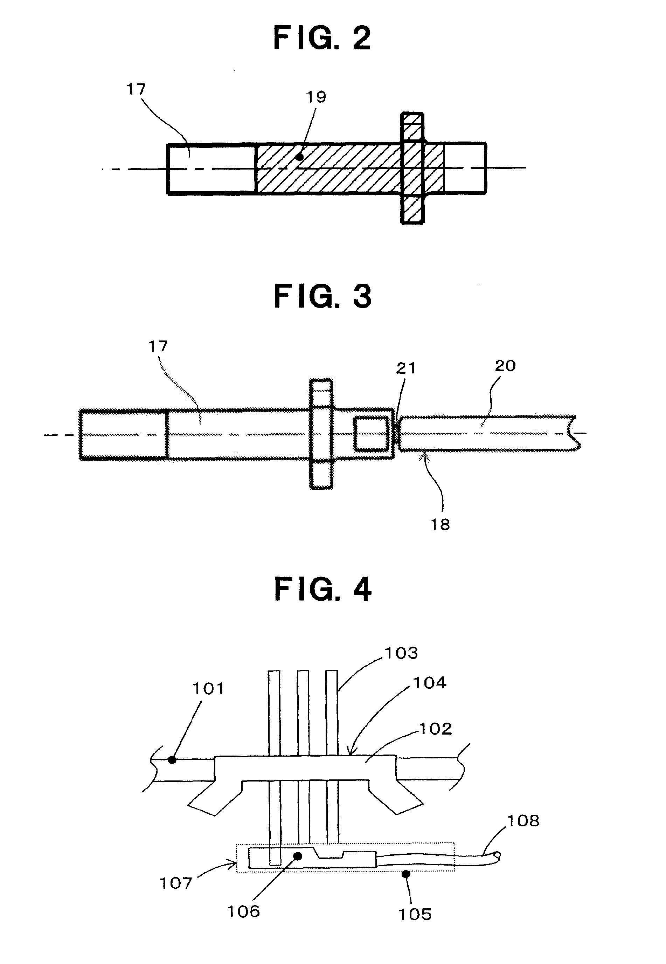

A structure has been known wherein power supply to a motor built in an electric compressor is carried out using a sealed terminal device (also called as a hermetic terminal) (for example, Patent document I). In such a conventional terminal device for an electric compressor, for example, as depicted in Fig. 4, hermetic terminal device 104, in which a plurality of terminals 103 are held by terminal plate 102 so as to extend through the plate 102 at a hermetic condition (for example, a hermetic condition via glass), is attached at a predetermined position of compressor housing 101, to the inner end of each hermetic terminal 103 of this hermetic terminal device 104, each input female terminal 106 of cluster 107, in which a plurality of input female terminals 106 are held in resin housing 105, is electrically connected by fitting, etc., and power is supplied to a coil wire for a stator of the built-in motor through electric wire 108 for power supply connected to the input female terminal 106.

Further, generally lubricant is contained in a fluid to be compressed by a compressor (for example, refrigerant R134a) for lubrication of respective parts of the compressor, etc., and in an electric compressor built in with a motor, because the lubricant-containing fluid to be compressed exists in (passes through) the motor container part for cooling the built-in motor, etc. and it comes into contact with the motor container part side of the terminal device, a high insulation property is required for this portion. In particular, in the above-described structure in which cluster 107 is connected to the inner end of hermetic terminal 103, because of presence of the connection structure having the electric communication portions by fitting, etc., many gap portions are formed, therein the lubricant-containing fluid to be compressed flows and the insulation property is liable to be reduced, and therefore, in order to prevent leak and the like through the lubricant, a high insulation property is required. In the conventional electric compressor as described above, usually, polyol ester-based oil, which is used generally for electric household appliances and the like, is used as the lubricant, and because this polyol ester-based oil has a relatively high insulation property as oil itself, no problem with respect to failure in insulation property occurs.
Patent document 1: JP-A-2006-42409

### Disclosure of the Invention

### Problems to be solved by the Invention

However, because the above-described polyol ester-based oil is expensive, there is a requirement to want to change the lubricant to a cheaper one, in particular, to polyalkylene glycol-based oil. However, because the polyalkylene glycol-based oil is low in insulation performance as compared with the polyol ester-based oil, if the kind of the lubricant is changed as the conventional cluster terminal structure is left as it is, anxiety with respect to insulation performance may remain.

Accordingly, an object of the present invention is to provide a terminal device for an electric compressor which can exhibit a sufficiently high insulation performance even in case where polyalkylene glycol-based oil is used as lubricant contained in fluid to be compressed, which can easily employ a structure using no cluster, and which is constructed in a simple structure and inexpensively while its insulation performance is improved.

### Means for solving the Problems

To achieve the above-described object, a terminal device for an electric compressor according to the present invention has a partition wall disposed between a container part for a compression mechanism drive motor present with a lubricant-containing fluid to be compressed and a power supply circuit part for supplying power to the motor for isolating the both parts from each other, and a power supply terminal member hermetically extending through the partition wall for supplying power to the motor, and is **characterized in that** an electric communication portion of the terminal member extending between the both parts is covered with an insulating varnish.

In such a terminal device for an electric compressor, only by a simple structure where a predetermined communication portion extending between the both parts of the terminal member hermetically extending through the partition wall, which is required with insulation property, is merely covered with an insulating varnish, the insulation property of this portion is greatly improved. Therefore, even when polyalkylene glycol-based oil low in insulation performance is used as lubricant contained in fluid to be compressed, it becomes possible to exhibit a necessary and sufficiently high insulation performance.

In particular, by forming the above-described terminal member in a bolt-like member capable of being fixed at a side of the power supply circuit part, for the terminal member provided as an electric communication member fixed at a predetermined position, a desirable insulation portion may be surely insulated.

Further, by employing a structure where an end of a lead wire for supplying power to the motor is connected directly to an end of the terminal member at a side of the motor container part, it becomes possible to remove the conventional cluster, it becomes possible to easily achieve a predetermined electric connection without employing a cluster structure at the inner end side of the terminal member, and because there is not a cluster structure, an unnecessary gaps and the like are not present, and it becomes possible to reduce the parts exposed for electric communication which are exposed to the lubricant-containing fluid to be compressed, thereby further improving the insulation performance.

As the above-described insulating varnish, for example, an electro-deposition varnish can be used. By using an electro-deposition varnish, a layer for insulation may be easily formed at a uniform membrane thickness, and a desired insulation property can be easily obtained over a desirable range.

As the above-described lubricant contained in the fluid to be compressed, for example, it is preferred to use a cheap polyalkylene glycol-based oil such as one aforementioned. Although the insulation property of polyalkylene glycol-based oil itself is lower than that of polyol ester-based oil, by the insulating varnish covering structure of the terminal member, it becomes possible to realize a sufficiently high insulation performance for a necessary portion.

In the terminal device for an electric compressor according to the present invention, the above-described partition wall is formed, for example, by a compressor housing. Further, it is also possible that the compressor housing is formed in an open-type structure, the opening portion of the compressor housing is tightly closed by a lid member, for example, by a lid member also functioning as a support member for the power supply circuit part, and a function of the above-described partition wall may be given to this lid member.

Further, although the terminal device for an electric compressor according to the present invention can be applied to any electric compressor requiring improvement of insulation performance and simplification of the structure for the terminal device portion, in particular, it is suitable for a compressor used in an air conditioning system for vehicles which is manufactured at a mass production style and which is required to be reduced in cost as a whole and for which reduction in cost of used lubricant is strongly required.

Where, the electric compressor in the present invention includes a so-called hybrid compressor which has a first compression mechanism driven only by an external drive source (for example, an engine for a vehicle or a motor for vehicle running) and a second compression mechanism driven only by a built-in motor in a single compressor and in which the first compression mechanism and the second compression mechanism are driven selectively or simultaneously, in addition to an electric compressor incorporating therein only a motor as a drive source for a compression mechanism. In case of the hybrid compressor, the present invention can be applied to a terminal device for the built-in motor.

### Effect according to the Invention

In the terminal device for an electric compressor according to the present invention, by covering a predetermined portion of the terminal member with an insulating varnish, it becomes possible to exhibit a sufficiently high insulation performance even when polyalkylene glycol-based oil is used as lubricant contained in fluid to be compressed, and a structure having no cluster may be easily employed. Therefore, a terminal device for an electric compressor having a desired insulation performance can be provided while its structure may be realized easily and inexpensively.

### Brief explanation of the drawings

[Fig. 1] Fig. 1 is vertical sectional view showing an example of an electric compressor applied with a terminal device for an electric compressor according to the present invention.
[Fig. 2] Fig. 2 is a schematic side view of a terminal member used in the terminal device for an electric compressor depicted in Fig. 1.
[Fig. 3] Fig. 3 is a schematic side view showing an example of connection of a lead wire for power supply to the terminal member depicted in Fig. 2.
[Fig. 4] Fig. 4 is a schematic diagram of a conventional terminal device.

### Explanation of symbols

- 1:: electric compressor
- 2:: fixed scroll
- 3:: movable scroll
- 4:: compression mechanism
- 8:: compressor housing
- 9:: motor
- 10:: rotational shaft
- 11:: stator
- 12:: rotor
- 13:: motor container part
- 14:: side wall of compressor housing as partition wall
- 15:: terminal device
- 16:: circuit part for power supply
- 17:: terminal member for power supply
- 18:: lead wire for power supply
- 19:: insulating varnish
- 20:: insulating cover tube
- 21:: coil wire for stator

### The Best mode for carrying out the Invention

Hereinafter, a desirable embodiment of the present invention will be explained referring to the drawings.

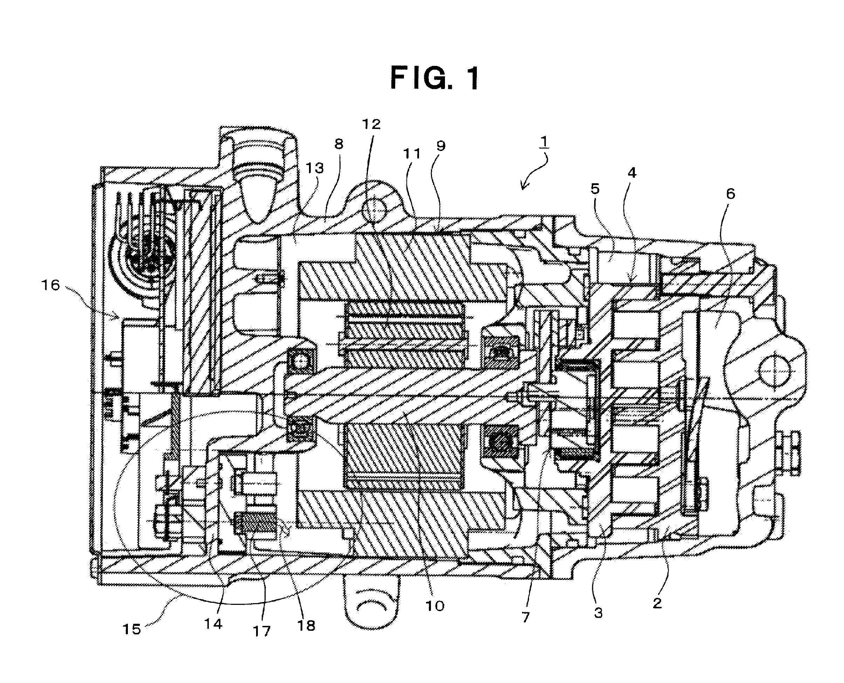

Fig. 1 depicts an example of an electric compressor applied with the present invention, Figs. 2 and 3 show an example of a terminal member of a terminal device in case where the present invention is applied to the electric compressor. In Fig. 1, symbol 1 indicates the whole of the electric compressor, electric compressor 1 has a scroll type compression mechanism 4 comprising a fixed scroll 2 and a movable scroll 3, and a fluid to be compressed (for example, refrigerant R134a) sucked from a suction chamber 5 is compressed in compression mechanism 4, and thereafter, it is discharged into a discharge chamber 6. Movable scroll 3 is driven by a rotational shaft 10 of a motor 9 built in a compressor housing 8 so as to achieve an orbital movement relative to fixed scroll 2 via a crank mechanism 7. Motor 9 comprises a stator 11 and rotor 12, and rotational shaft 10 is rotated integrally with rotor 12. The fluid to be compressed contains lubricant which is polyalkylene glycol-based oil, and this lubricant-containing fluid to be compressed is passed also through a container part 13 for the built-in motor 9.

A terminal device 15 is provided on a side wall 14 of compressor housing 8, and a predetermined power is supplied to motor 9 through terminal device 15 from a circuit part for power supply 16 connected to an external power source (not shown). This power supply is performed through a terminal member for power supply 17 to motor 9, which extends hermetically through a partition wall (in this embodiment, side wall 14 of compressor housing 8) that is disposed between container part 13 for motor 9 for driving the compression mechanism present with the lubricant containing fluid to be compressed and circuit part for power supply 16 to motor 9 and that isolates the both parts, and a lead wire for power supply 17 for motor 9 connected to the inner end of the terminal member 17 (the motor container part-side end). The core wire of lead wire for power supply 18 extends toward stator 11 so as to form the coil of stator 11 of motor 9.

As depicted in Fig. 2, the above-described terminal member 17 is formed as a bolt-like member capable of being fixed at the side of circuit part for power supply 16. The electric communication portion of this terminal member 17 extending between the two parts of motor container part 13 and power supply circuit part 16 is covered with an insulating varnish 19 comprising an electro-deposition varnish, and the outer surface of terminal member 17 in this section is completely insulated from the circumferences. Therefore, particularly, the inner end side portion of and its vicinity of terminal member 17 are ensured with a high insulation performance even if they come into contact with the oil contained in the fluid to be compressed.

As depicted in Fig. 3, to the inner end of terminal member 17 (the motor container part side end), the end portion of lead wire for power supply 18, in particular, the end portion of coil wire 21 for stator 11 of motor 9, which is the core wire of lead wire for power supply 18 covered with a insulating cover tube 20, is connected, for example, by caulking and the like.

In the terminal device for an electric compressor thus constructed, by the structure where the outer surface of the predetermined portion of terminal member 17 is covered with insulating varnish 19, even when polyalkylene glycol-based oil is used as lubricant contained in fluid to be compressed, it becomes possible to exhibit a sufficiently high insulation performance against the circumferences of terminal member 17. Further, by enhancing the insulation property at this portion and connecting the end portion of coil wire 21 of stator 11 directly to the inner end of terminal member 17, it becomes possible to easily achieve a structure in which a cluster in the conventional structure is not used. Thus, while employing an extremely simple structure, a terminal device for an electric compressor exhibiting a desired insulation performance can be realized inexpensively.

### Industrial Applications of the Invention

The terminal device for an electric compressor according to the present invention can be applied to any electric compressor incorporating therein a motor, and in particular, it is suitable for a compressor used in an air conditioning system for vehicles which is manufactured at a mass production style and which is required to be reduced in cost as the whole of the compressor and for which reduction in cost of used lubricant is required.

## Claims

1. A terminal device for an electric compressor having a partition wall disposed between a container part for a compression mechanism drive motor present with a lubricant-containing fluid to be compressed and a power supply circuit part for supplying power to said motor for isolating said both parts from each other, and a power supply terminal member hermetically extending through said partition wall for supplying power to said motor, **characterized in that** an electric communication portion of said terminal member extending between said both parts is covered with an insulating varnish.

2. The terminal device for an electric compressor according to claim 1, wherein said terminal member is a bolt-like member capable of being fixed at a side of said power supply circuit part.

3. The terminal device for an electric compressor according to claim 1, wherein an end of a lead wire for supplying power to said motor is connected directly to an end of said terminal member at a side of said motor container part.

4. The terminal device for an electric compressor according to claim 1, wherein said insulating varnish is an electro-deposition varnish.

5. The terminal device for an electric compressor according to claim 1, wherein a polyalkylene glycol-based oil is used as said lubricant.

6. The terminal device for an electric compressor according to claim 1, wherein said partition wall is formed by a compressor housing.

7. The terminal device for an electric compressor according to claim 1, wherein said electric compressor is a compressor used in an air conditioning system for vehicles.
